# EUROPÄISCHE PATENTSCHRIFT

(11) **EP 1 231 816 B1**
(45) Veröffentlichungstag und Bekanntmachung des Hinweises auf die Patenterteilung: **19.04.2006**
(21) Anmeldenummer: 02100098.9
(22) Anmeldetag: 01.02.2002
(51) Int. Cl.: H04R 1/02

(54) **Elektronisches Gerät mit einer Lautsprechereinrichtung**
Electronic device with a loudspeaker system
Dispositif électronique avec un système de haut-parleurs

(30) Priorität: 08.02.2001 DE 10105676
(43) Veröffentlichungstag der Anmeldung: 14.08.2002
(73) Patentinhaber: BenQ Corporation, Gueishan Taoyuan 333 (TW)
(72) Erfinder: Brenner, Stefan, 71083, Herrenberg (DE); Schrack, Cornelia, 89075, Ulm (DE)
(74) Vertreter: Epping, Wilhelm

(56) Entgegenhaltungen:
- EP-A- 1 059 829
- EP-A- 1 089 606
- US-A- 5 761 322
- US-A- 5 825 606

## Beschreibung

Die Erfindung betrifft ein elektronisches Gerät mit einem elektroakustischen Bauteil, insbesondere einer Lautsprechereinrichtung, nach dem Oberbegriff des Anspruchs 1.

Kleine tragbare elektronische Geräte - insbesondere solche, die während des Gebrauches in der Hand gehalten werden (sogenannte "Handhelds") - sind aus dem alltäglichen Leben der Menschen in den Industrieländern nicht mehr wegzudenken. Viele dieser Geräte haben eine eingebaute Lautsprechereinrichtung zur Musik- und/oder Sprachwiedergabe ohne angeschlossene Ohr- bzw. Kopfhörer. Die Musik- bzw. Sprachwiedergabe über einen solchen eingebauten Lautsprecher ist zwar gegenüber einer Kopfhörerwiedergabe mit einem erhöhten Leistungsverbrauch verbunden, für den Benutzer in vielen Fällen aber komfortabler. Mit dem Siegeszug der Mobiltelefone und der zunehmenden Verbreitung von Schnurlostelefonen im privaten wie kommerziellen Bereich sind auch handgehaltene Geräte mit Mikrofonen zur Spracheingabe zu Massenartikeln geworden. Die Entwicklung wird durch das Vordringen der Sprachsteuerung bei Datenverarbeitungsgeräten, wie Organizern, PDAs, Handheld-PCs und Taschenübersetzern, noch wesentlich beschleunigt.

Derartige Geräte sind nicht nur wegen ihrer technischen Funktion bzw. Funktionen, sondern auch als Lifestyle-Artikel gefragt. Bei ihrer Gestaltung müssen daher Modetrends beachtet werden, um sie über ihre gesamte physische Lebensdauer attraktiv für den Benutzer zu halten. Aus diesem Grund bieten viele Hersteller für derartige Geräte austauschbare Gehäuseteile an, mit denen der Nutzer das äußere Erscheinungsbild des Gerätes jederzeit seinen aktuellen ästhetischen Bedürfnissen anpassen kann.

Es handelt sich dabei in der Regel um Gehäuse-Oberschalen oder Abdeckungen, die denjenigen Teil des Gehäuses bilden, unter dem die Lautsprechereinrichtung bzw. auch das Mikrofon angeordnet sind. Das Abnehmen des ursprünglichen Gehäuseteils und das Aufsetzen eines Austauschteils muß für den Nutzer schnell und leicht und möglichst ohne Werkzeug möglich sein. Es dürfen sich dabei aber die akustischen Eigenschaften des Gerätes nicht oder jedenfalls nicht wesentlich verschlechtern.

Die bei solchen Geräten vorgesehenen Schallaus- bzw. -eintrittsöffnungen umfassen in der Regel einen ersten, einem Grundteil (Montagerahmen) zugeordneten Öffnungsabschnitt und einen zweiten, dem in Rede stehenden austauschbaren Gehäuseteil zugeordneten Öffnungsabschnitt, denn das elektroakustische Bauteil selbst sitzt im Grundteil. Zwischen dem Grundteil und dem Gehäuseteil ist eine akustische Abdichtung bzw. Entkopplung vorzusehen, um eine negative Beeinflussung der Klangeigenschaften durch das Gehäuse (Resonanzen, "Scheppern" etc.) zu verhindern. Dies wird bei bekannten Geräten durch das Einkleben eines zwischen beiden Öffnungsbereichen liegenden Dichtungsrings realisiert.

Dieser Dichtungsring stellt ein zusätzlich zu fertigendes, logistisch zu handhabendes und schließlich zu montierendes Teil und damit einen Faktor der tendenziellen Verteuerung der Herstellung der in Rede stehenden Geräte dar.

Die Druckschrift US 5,761,322 offenbart ein System von elektronischen Geräten in Form eines tragbaren Computers mit einem Bildschirm und Lautsprechern. Zur Vermeidung des grundsätzlichen Problems von akustischen Lautsprechern, dass akustische Abstrahlung von der Rückseite des beweglichen Teils des Lautsprechers außer Phase mit der Abstrahlung von der Vorderseite des Lautsprechergeräts sein kann, wird der Lautsprecher in einen sogenannten Kammerdeckel eingesetzt, der durch ein Kammerrückteil verschlossen wird. Zwischen Deckel und Rückteil ist eine Dichtungsschicht vorgesehen. Somit ist die Rückseite des Lautsprechers dicht abgeschlossen. Gemäß einer Ausführungsform davon kann die Dichtungsschicht auch auf dem Kammerdeckel vorgesehen sein. Ziel ist es in jedem Fall, den Lautsprecher bzw. dessen Rückseite in einer dichten Kammer anzuordnen, wobei die Lautsprechervorderseite bzw. Lautsprecheröffnung freiliegt und ohne weiteres der Anzeigeabdeckung zugewandt werden kann.

Die Druckschrift US 5 825 606 offenbart ein Funktelefon mit Mikrofon und Lautsprecher, wobei die beiden elektroakustischen Bauteile auf einem Grundteil montiert sind, welches mit einer Oberschale das Gehäuse des Funktelefons bildet. Zum Schutz vor elektrostatischen Entladungen ist eine zweilagige Folie mit Öffnungen für Mikrofon und Lautsprecher vorgesehen. Zur Bereitstellung einer Dichtung gegen Staub- und Schall-Rückkopplungen sind Dichtungsrippen an der Oberschale vorgesehen, die im zusammengebauten Zustand von Grundteil und O-berschale die Folie komprimieren.

Der Erfindung liegt daher die Aufgabe zugrunde, ein verbessertes elektronisches Gerät zu schaffen, welches einfacher und kostengünstiger herstellbar ist, ohne daß Nachteile hinsichtlich der akustischen Eigenschaften zu befürchten sind.

Diese Aufgabe wird durch ein elektronisches Gerät mit den Merkmalen des Anspruchs 1 gelöst.

Die Erfindung schließt den Gedanken, die erforderliche akustische Abdichtung zwischen dem die Lautsprechereinrichtung aufnehmenden Grundteil und einem daran befestigten, separaten (insbesondere austauschbaren) Gehäuseteil durch eine entsprechende Gestaltung dieser Teile selbst zu bewerkstelligen. Sie schließt weiter den Gedanken ein, ein die Abdichtung bewirkendes Element an das Grundteil oder das Gehäuseteil einstückig anzuformen oder es aus zwei einstückigen Anformungen an jede der beiden Gerätekomponenten auszubilden. Mit der Erfindung wird somit der wesentliche Vorteil erreicht, daß das Grundteil und Gehäuseteil ohne zusätzliche Einfügung eines separaten Dichtungselementes besonders einfach und schnell montiert werden können. Zudem fällt der mit der separaten Herstellung, Lagerhaltung und Zuführung eines Zusatzteiles verbundene Aufwand fort, der sich bei einem auf Kostenminimierung ausgerichteten Produktionsprozeß deutlich nachteilig auswirkt.

In einer bevorzugten Ausführung der Erfindung handelt es sich bei dem Gerät um ein Mobilfunk-Endgerät mit einem Montagerahmen, in dem in an sich bekannter Weise die in diesem Fall als Hörkapsel bezeichnete Lautsprechereinrichtung angeordnet ist, und einer auf diesen aufsteckbaren Gehäuse-Oberschale. Auch ein Schnurlostelefon ist grundsätzlich so aufgebaut (wenn auch derzeit austauschbare Oberschalen für Schnurlostelefone noch weniger verbreitet sind als für Mobiltelefone).

In einer anderen Ausführung handelt es sich bei dem Gerät um ein Audiogerät, speziell einen Walkman, Discman oder MP3-Spieler oder auch ein Diktiergerät, mit entsprechendem Aufbau. Auch ein mit einer Lautsprechereinrichtung ausgerüsteter tragbarer Computer (Handheld-PC, PDA) oder Taschenübersetzer kann Gegenstand der Ausführung der Erfindung sein. Ebenso ist die Erfindung bei multifunktionellen Geräten mit Audiostufe und Lautsprechereinrichtung anwendbar, beispielsweise bei Kombinationsgeräten aus einem Mobiltelefon und einem Diktiergerät, einem Mobiltelefon und einem PDA oder einem PDA und einem MP3-Spieler.

Die Dichtung ist insgesamt bevorzugt als sogenannten Labyrinthdichtung ausgeführt, die diese Bezeichnung deshalb trägt, weil der Ausbreitungsweg des Schalls labyrinthartig gewunden vorbestimmt ist. Hierdurch wird eine weitgehende Auslöschung längs des Ausbreitungsweges erreicht.

Diese Labyrinthdichtung umfaßt insbesondere ein an das Grundteil angeformtes erstes Dichtungselement und ein an das separate Gehäuseteil angeformtes zweites Dichtungselement, wobei beide Dichtungselemente die Schallaustrittsöffnung ringförmig umgebende Vorsprünge aufweisen. Die greifen im montierten Zustand (im Querschnitt gesehen) fingerartig ineinander. Der Ausbreitungsweg des Schalls (das "Labyrinth") verläuft zwischen den Fingern der beiden Teile.

Die Oberflächen des ersten und zweiten Dichtungselementes sind in einer besonders sinnvollen konstruktiven Ausgestaltung nicht exakt konkurrent zueinander. Vielmehr sind die ringförmigen Vorsprünge eines der beiden Teile sanfter gerundet als diejenigen des anderen, so daß das Abnehmen des Gehäuseteils vom Grundteil erleichternde Spaltabschnitte zwischen beiden gebildet sind. Auch das Aufsetzen des neuen - analog ausgeführten - Gehäuseteils wird durch diese geringfügige Inkonkurrenz der Kreisringabschnitte erleichtert.

Das separate und speziell austauschbare Gehäuseteil ist in aller Regel aus Kunststoff gefertigt, und die dort angeformten Vorsprünge haben - eine nicht zu große Wandungsstärke vorausgesetzt - eine gewisse Formelastizität, die sowohl die Schallauslöschung im "Labyrinth" fördert als auch das Abnehmen und Aufsetzen auf den Montagerahmen zusätzlich erleichtert. Auch der Montagerahmen selbst ist vielfach aus Kunststoff gefertigt, und seine eigene Formelastizität hat eine entsprechende Wirkung. Falls das Gehäuseteil - in speziellen Ausführungen - aus Metall gefertigt sein sollte - können die genannten Effekte auch allein von einem Kunststoff-Montagerahmen getragen werden.

Gemäß der üblichen Gestalt der Schallaustrittsöffnungen bei den in Rede stehenden Geräten sind die die Labyrinthdichtungen bildenden Vorsprünge in der Regel wohl kreisringförmig. Bei elliptisch oder oval geformten Austrittsöffnungen weicht aber auch die Form der die Austrittsöffnungen ringförmig umgebendenen Vorsprünge von der Kreisringgestalt ab, ist also ebenfalls elliptisch oder oval oder auch tropfen- oder linsenförmig o. ä.

Vorteile und Zweckmäßigkeiten der Erfindung ergeben sich im übrigen aus den Unteransprüchen sowie der nachfolgenden Beschreibung eines bevorzugten Ausführungsbeispiels anhand der Figuren. Von diesen zeigen:
Fig. 1 eine perspektivische Ausschnittdarstellung des Montagerahmens (in Draufsicht) und der Oberschale (in Untersicht) eines Mobiltelefons im Bereich der Schallaustrittsöffnungen der Hörkapsel und
Fig. 2 eine schematische Querschnittsdarstellung der an den Montagerahmen bzw. die Oberschale angeformten Dichtungselemente.

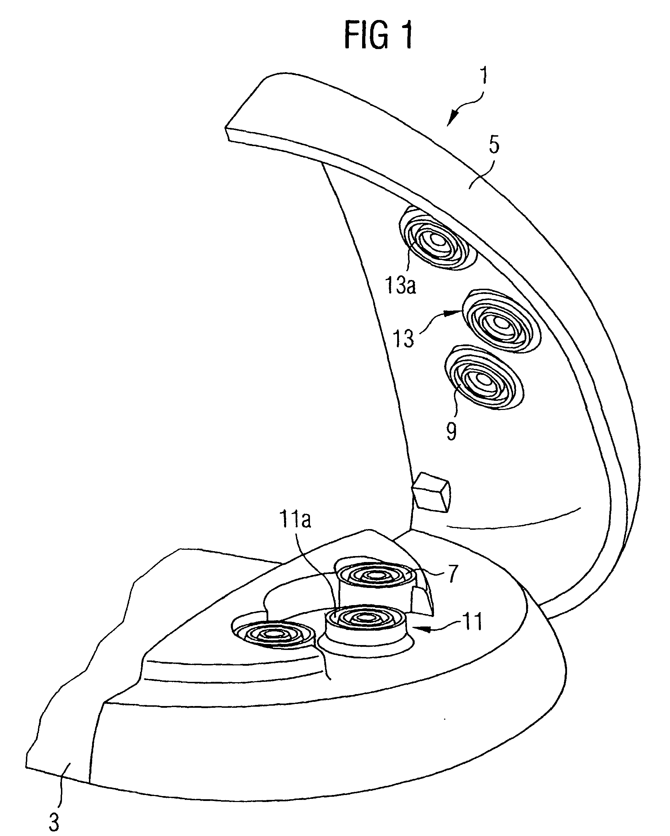

Fig. 1 zeigt in einer schematischen Ausschnittdarstellung den oberen Bereich des mechanischen Aufbaus eines Mobiltelefons 1 mit einem Montagerahmen 3 und einer Gehäuse-Oberschale 5.

Beide Teile 3, 5 sind aus schlagzähem Kunststoff spritzgegossen und haben in der dargestellten Ausführung jeweils drei Schallaustrittsöffnungen 7 bzw. 9. Die Gehäuse-Oberschale 5 ist - in an sich bekannter Weise - als separates Teil gefertigt und lieferbar und wird durch Verrasten auf dem Montagerahmen 3 befestigt. Unterhalb dieser befindet sich im Montagerahmen eine (nicht dargestellte) Hörkapsel zur Sprachwiedergabe. Jede der Schallaustrittsöffnungen 7, 9 des Montagerahmens 3 bzw. der Gehäuse-Oberschale 5 ist von einem ersten bzw. zweiten Dichtungselement 11, 13 zur akustischen Abdichtung der Kunststoffteile gegeneinander versehen. Die Dichtungselemente 11, 13 sind jeweils einstückig an den Montagerahmen 3 bzw. die Gehäuse-Oberschale 5 angespritzt. Sie umfassen jeweils mehrere, konzentrische kreisringförmige Vorsprünge 11a, 13a.

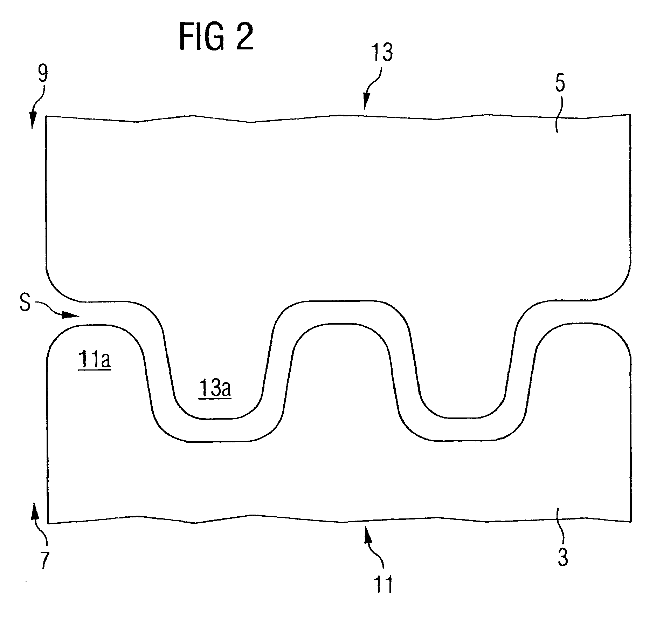

In Fig. 2 ist schematisch der Aufbau der Dichtungselemente 11, 13 in einer Querschnittsdarstellung jeweils einer Wandung derselben dargestellt. Hier ist zu erkennen, wie die drei Vorsprünge 11a am Montagerahmen 3 und die zwei Vorsprünge 13a an der Gehäuse-Oberschale in der oben erläuterten Weise fingerartig ineinandergreifen. Es ist auch die oben erwähnte labyrinthartige Ausbildung eines Schallausbreitungsweges S von den Schallaustrittsöffnungen 7, 9 des Montagerahmens bzw. der Gehäuse-Oberschale her in den Zwischenraum zwischen beiden zu erkennen, in dem die Schallwellen weitestgehend ausgelöscht werden.

Die Ausführung der Erfindung ist aber nicht auf diese konkrete konstruktive Ausgestaltung und die Anwendung bei einem Mobiltelefon beschränkt, sondern - worauf oben bereits hingewiesen wurde - ebenso in vielfältigen Abwandlungen möglich, die im Rahmen fachgemäßen Handelns liegen.

## Patentansprüche

1. Elektronisches Gerät (1) mit einem elektroakustischen Bauteil, insbesondere einer Lautsprechereinrichtung, wobei das Gerät folgende Merkmale aufweist:
ein Grundteil (3), in dem das elektroakustische Bauteil montiert ist, welchem eine erste Schalldurchtrittsöffnung (7) zugeordnet ist; und
ein separat gefertigtes, insbesondere austauschbares, Gehäuseteil (5), welches eine zweite Schalldurchtrittsöffnung (9) umfasst, die in Gebrauchslage oberhalb der ersten Schalldurchtrittsöffnung (7) vorsehbar ist,
**dadurch gekennzeichnet, daß**
die ersten und zweiten Schalldurchtrittsöffnungen im Grundteil und Gehäuseteil jeweils von einer einstückig angeformten Dichtung zur akustischen Abdichtung zwischen Grundteil und Gehäuseteil umgeben sind, wobei die Dichtung als Labyrinthdichtung (11, 13) aus einem an das Grundteil (3) angefertigten ersten Dichtungselement (11) und einem an das Gehäuseteil (5) angefertigten zweiten Dichtungselement (13) ausgebildet ist, wobei das erste und zweite Dichtungselement ringförmige Vorsprünge (11a, 13a) aufweisen, welche im montierten Zustand im Querschnitt fingerartig ineinandergreifen.

2. Elektronisches Gerät nach Anspruch 1,
**gekennzeichnet durch**
die Ausführung als Mobilfunk-Endgerät (1) oder Schnurlostelefon, wobei das Grundteil als Montagerahmen (3), das Gehäuseteil als auswechselbare Gehäuse-Oberschale (5) und die Lautsprechereinrichtung als Hörkapsel ausgebildet sind.

3. Elektronisches Gerät nach Anspruch 1,
**gekennzeichnet durch**
die Ausführung als Audiogerät, insbesondere Walkman, Discman, MP3-Spieler oder Diktiergerät, oder tragbarer Computer mit Audiostufe, insbesondere Handheld-PC oder PDA.

4. Elektronisches Gerät nach Anspruch 3,
**dadurch gekennzeichnet, daß**
die ringförmigen Vorsprünge (11a, 13a) des Grundteils (3) und/oder des Gehäuseteils (5) derartige Abmessungen, insbesondere eine solche Wandstärke, haben, daß sie eine vorbestimmte, das Aufsetzen und Abnehmen des Gehäuseteils auf das bzw. von dem Grundteil erleichternde, Formelastizität haben.

5. Elektronisches Gerät nach Anspruch 3 oder 4,
**dadurch gekennzeichnet, daß**
die aneinander zugewandten Oberflächen des ersten und zweiten Dichtungselementes (11, 13) nicht exakt konkurrent sind derart, daß das Abnehmen des Gehäuseteils vom Grundteil erleichternde Spaltabschnitte zwischen beiden ausgebildet sind.

6. Elektronisches Gerät nach einem der vorangehenden Ansprüche 3 bis 5,
**dadurch gekennzeichnet, daß**
die ringförmigen Vorsprünge (11, 13) des ersten und zweiten Dichtungselementes kreisringförmig sind.

7. Elektronisches Gerät nach einem der vorangehenden Ansprüche,
**dadurch gekennzeichnet, daß**
das separat gefertigte Gehäuseteil (5) und/oder das Grundteil (3) aus Kunststoff gefertigt sind.

8. Elektronisches Gerät nach einem der Ansprüche 3 bis 7,
**dadurch gekennzeichnet, daß**
das erste Dichtungselement (11) am Grundteil (3) drei ringförmige Vorsprünge und das zweite Dichtungselement (13) am Gehäuseteil (5) zwei ringförmige Vorsprünge hat oder umgekehrt.

## Claims

1. Electronic device (1) having an electro-acoustic component, in particular a loudspeaker system, with said device having the following features:
a base part (3) in which is mounted the electro-acoustic component to which a first sound passage aperture (7) has been assigned; and
a separately fabricated, in particular interchangeable housing part (5) that includes a second sound passage aperture (9) which in the position when being used can be provided above the first sound passage aperture (7),
**characterised in that**
the first and second sound passage apertures in the base part and housing part are each surrounded by a seal moulded as a single piece for providing an acoustical seal between the base part and housing part,
wherein said seal is embodied as a labyrinth seal (11, 13) from a first sealing element (11) fabricated on the base part (3) and from a second sealing element (13) fabricated on the housing part (5), with said first and second sealing element having ring-shaped projections (11a, 13a) which in the assembled condition interlock in cross-section like fingers.

2. Electronic device according to claim 1,
**characterised by**
being implemented as a mobile radio terminal (1) or cordless telephone, with the base part being embodied as a mounting frame (3), the housing part as an interchangeable top housing shell (5) and the loudspeaker system as an insertion earphone.

3. Electronic device according to claim 1,
**characterised by**
being implemented as an audio device, in particular a Walkman, Discman, MP3 player or dictating machine, or a portable computer having an audio stage, in particular a handheld PC or PDA.

4. Electronic device according to claim 3,
**characterised in that**
the ring-shaped projections (11a, 13a) of the base part (3) and/or housing part (5) have dimensions of such a type, in particular a wall thickness of such a type that they will exhibit a pre-determined elasticity of shape facilitating attachment and removal of the housing part to and from the base part.

5. Electronic device according to claim 3 or 4,
**characterised in that**
the surfaces of the first and second sealing element (11, 13) facing each other are not exactly concurrent in such a way that gap sections facilitating removal of the housing part from the base part are formed between the two.

6. Electronic device according to one of the preceding claims 3 to 5,
**characterised in that**
the ring-shaped projections (11, 13) of the first and second sealing element are circular.

7. Electronic device according to one of the preceding claims,
**characterised in that**
the separately fabricated housing part (5) and/or the base part (3) are made of plastic.

8. Electronic device according to one of the claims 3 to 7,
**characterised in that**
the first sealing element (11) on the base part (3) has three circular projections and the second sealing element (13) on the housing part (5) has two ring-shaped projections, or vice versa.

## Revendications

1. Appareil électronique (1) avec un composant électroacoustique, notamment un dispositif de haut-parleur, l'appareil présentant les caractéristiques suivantes :
une partie de base (3), dans laquelle est monté le composant électroacoustique auquel est associée une première ouverture de passage acoustique (7); et
une partie de boîtier (5) fabriquée séparément, notamment remplaçable, laquelle comprend une deuxième ouverture de passage acoustique (9) qui peut être prévue dans la position d'utilisation au-dessus de la première ouverture de passage acoustique (7),
**caractérisé en ce que**
les premières et deuxièmes ouvertures de passage acoustique sont entourées dans la partie de base et la partie de boîtier à chaque fois d'un joint formé d'une seule pièce pour l'étanchéité acoustique entre la partie de base et la partie de boîtier, le joint étant conçu comme une garniture en labyrinthe (11, 13) composée d'un premier élément de joint fabriqué sur la partie de base (3) et d'un deuxième élément de joint (13) fabriqué sur la partie de boîtier (5), le premier et le deuxième élément de joint présentant des parties en saillie en forme d'anneau (11a, 13a), lesquels à l'état monté s'emmanchent l'un dans l'autre à la manière d'un doigt en section transversale.

2. Appareil électronique selon la revendication 1,
**caractérisé par**
la réalisation en tant qu'appareil terminal de radiocommunication mobile (1) ou téléphone sans fil, dans lequel la partie de base est conçue comme cadre de montage (3), la partie de boîtier comme coque supérieure de boîtier remplaçable (5) et le dispositif de haut-parleur comme capsule d'écouteur.

3. Appareil électronique selon la revendication 1,
**caractérisé par**
la réalisation en tant qu'appareil audio, notamment walkman, discman, lecteur MP3 ou dictaphone, ou ordinateur portable avec niveau audio, en particulier ordinateur de poche ou assistant numérique personnel.

4. Appareil électronique selon la revendication 3,
**caractérisé en ce que**
les parties en saillie en forme d'anneau (11a, 13a) de la partie de base (3) et/ou de la partie de boîtier (5) ont de telles dimensions, notamment une telle épaisseur de paroi, qu'elles ont une élasticité de forme prédéterminée, facilitant la pose et l'enlèvement de la partie de boîtier sur, resp. de la partie de base.

5. Appareil électronique selon la revendication 3 ou 4,
**caractérisé en ce que**
les surfaces orientées l'une vers l'autre du premier et du deuxième élément d'étanchéité (11, 13) ne sont pas exactement concurrentes de telle sorte que des sections de fente facilitant l'enlèvement de la partie de boîtier de la partie de base sont conçues entre les deux.

6. Appareil électronique selon l'une des revendications précédentes 3 à 5,
**caractérisé en ce que**
les parties en saillie en forme d'anneau (11, 13) du premier et du deuxième élément de joint sont en forme d'anneau de cercle.

7. Appareil électronique selon l'une des revendications précédentes,
**caractérisé en ce que**
la partie de boîtier fabriquée séparément (5) et/ou la partie de base (3) sont fabriquées en matière plastique.

8. Appareil électronique selon l'une des revendications 3 à 7,
**caractérisé en ce que**
le premier élément de joint (11) sur la partie de base (3) possède trois parties en saillie en forme d'anneau et le deuxième élément de joint (13) sur la partie de boîtier (5) deux parties en saillie en forme d'anneau ou inversement.
